Europäisches Patentamt

(19) European Patent Office

Office européen des brevets

(11) Publication number: 0 140 408

A1

## (12) EUROPEAN PATENT APPLICATION

(21) Application number: 84201290.8

(22) Date of filing: 08.09.84

(51) Int. Cl.⁴: **C 08 L 27/06**
//(C08L27/02, 23:16, 23:26)

(30) Priority: 10.09.83 NL 8303139

(43) Date of publication of application:
08.05.85 Bulletin 85/19

(84) Designated Contracting States:
BE DE FR GB IT LU NL

(71) Applicant: Limburgse Vinyl Maatschappij N.V.
Neerstraat 5
B-3980 Tessenderlo(BE)

(72) Inventor: Schepers, Herman Augustinus Johannes
Leentstraat 33
NL-6171 LC Stein (L.)(NL)

(72) Inventor: Debets, wilhelmus Antonius Marie
Dr. Philipsstraat 91
NL-6136 XX Sittard(NL)

(74) Representative: van Golde, Lambertus Maria Gerardus
T. et al,
OCTROOIBUREAU DSM P.O. Box 9
NL-6160 MA Geleen(NL)

(54) Polymer composition based on a vinyl chloride polymer and processes for the production of such a polymer composition.

(57) The invention accords to a new impact-resistant polymer composition based on a vinyl chloride polymer which at least consists of
a)   100 parts by weight of polyvinyl chloride,
b)   2 - 25 parts by weight of carboxylated rubber,
c)   0 - 25 parts by weight of uncarboxylated rubber, and
d)   1 - 15 parts by weight of a polymer at least consisting of vinyl alcohol groups and vinyl chloride groups in a molar ratio between 1 : 5 and 1 : 50, in which polymer composition the total amount of rubber is at least 4% (wt) calculated on the total quantity polymer composition and a process for preparing such a polymer composition.

The polymer composition according to the invention shows a far better impact resistance than ordinary polyvinyl chloride, while the flexural modulus does not differ much from the very good flexural modulus of ordinary polyvinyl chloride.

Croydon Printing Company Ltd.

POLYMER COMPOSITION BASED ON A VINYL CHLORIDE POLYMER
AND PROCESSES FOR THE PRODUCTION OF SUCH A
POLYMER COMPOSITION

The invention relates to a new impact-resistant polymer composition based on a vinyl chloride polymer and characterized in that it at least consists of

a) 100 parts by weight of polyvinyl chloride,

b) 2 - 25 parts by weight of carboxylated rubber,

c) 0 - 25 parts by weight of uncarboxylated rubber, and

d) 1 - 15 parts by weight of a polymer at least consisting of vinyl alcohol groups and vinyl chloride groups in a molar ratio between 1 : 5 and 1 : 50, preferably between 1 : 8 and 1 : 20, in which polymer composition the total amount of rubber is at least 4 % (wt) calculated on the total quantity of polymer composition.

The polymer composition according to the invention preferably consists of at least

a) 100 parts by weight of polyvinyl chloride,

b) 2 - 10 parts by weight of carboxylated rubber,

c) 0 - 10 parts by weight of uncarboxylated rubber, and

d) 1 - 10 parts by weight of the said polymer which at least consists of vinyl alcohol groups and vinyl chloride groups.

Here polyvinyl chloride is understood to mean homopolymers of vinyl chloride and copolymers of vinyl chloride that can contain a minor quantity, for instance to 30 moles %, of one or more copolymerizable monomers, such as alkenes with 2 to 12 carbon atoms, such as ethylene, propylene, butene, isobutene, etc. as well as dienes, such as, for instance, butadiene or isoprene, as well as vinyl esters and allyl esters, such as vinyl acetate, vinyl chloracetate, vinyl propionate, vinyl butyrate, allyl acetate, etc. or vinyl aromatic compounds, for instance styrene, α-methylstyrene, chlorostyrene, vinyl toluene or other monomers copolymerizable with vinyl chloride, such as vinylidene chloride, maleic acid esters, etc.

The carboxylated rubber usually applied is a carboxylated ethylene-propylene-diene rubber (EPDM rubber) with, for instance, 0.1 -10 % (wt) maleic anhydride groups. A suitable process for preparing such a carboxylated ethylene-propylene-diene rubber and examples of such rubbers are mentioned in the British patent specification 1.436.981, the contents of which are here referred to for the sake of brevity.

The uncarboxylated rubber that can be used efficiently is an ethylene-propylene-rubber (EPM rubber) and/or an ethylene-propylene-diene rubber (EPDM rubber).

A suitable process for preparing the polymer which at least consists of vinyl alcohol groups and vinyl chloride groups consists of the copolymerization of vinyl acetate and vinyl chloride and the subsequent saponification of the resulting polymer. The polymer may contain, in addition to the said monomer groups, minor quantities, for instance to 30 moles %, of other monomer groups. Suitable monomers are ethylene, vinylidene chloride, vinyl esters of carboxylic acids with, for instance, 1 - 20 C-atoms per carboxylic acid molecule and preferably 1 - 6 C-atoms per carboxylic acid molecule, such as vinyl acetate, vinyl propionate, etc.

The present polymer composition may contain customary additives, such as stabilizers, processing aids, for instance lubricants, pigments, fillers, etc. The polymer composition preferably contains 0.1 - 2 parts by weight of one or more UV stabilizers such as, for instance, 2-hydroxy-4-n-octoxybenzophenone, 2-hydroxy-4-methoxybenzophenone, 2-hydroxy-4-dodecyloxybenzophenone, 2-(2'-hydroxy-3', 5'-di-tert-butylphenyl) benzotriazol, 2-(2'-hydroxy-3'-tert-butyl-5'-methylphenyl)-5-chlorobenzotriazole, 2-(2'-hydroxy-3', 5'-di-tert-butylphenyl)-5-chlorobenzotriazole, 2-(2'-hydroxy-3',5'-di-tert-amylphenyl) benzotriazole, 2-(2'-hydroxy-5'-methyl-phenyl)benzotriazole, (2',4'-di-tert-butylphenyl)-3,5-di-tert-butyl-4-hydroxybenzoate, 2-ethoxy-5-tert-butyl-2'-ethyl-oxalic acid-bis-anilide, [2,2'-thiobis-(4-tert-octyl phenolate)-n-butylamine]nickel, nickel-bis-[o-ethyl-(3,5-di-tertbutyl-4-hydroxybenzyl)]phosphonate, nickel-bis-[1-phenyl-3-methyl-4-dexanoylpyrazolate(5)], di-(2,2,6,6-tetramethyl-4-piperidiyl)sebacate, bis-(1,2,2,6,6-pentamethylpiperidyl)-(3',5'-di-tert-butyl-4'-hydroxybenzyl)-butylmalonate, oligomer based on succinic acid and N-(2-hydroxyethyl)-2,2,6,6-tetramethyl-4-piperidinol, oligomer based on cyanuric acid and N,N-di-(2,2,6,6-tetramethyl-4-piperidyl) hexamethylenediamine, and bis(2,4-di-butylphenyl)-pentaerythrityldi-phosphite.

The polymer composition according to the invention shows a far better impact resistance than ordinary polyvinyl chloride, while the flexural modulus does not differ much from the very good flexural modulus of ordinary polyvinyl chloride.

The polymer composition according to the invention can be made as known in the art from the various raw materials while applying the processes customary for that purpose. Depending on the form in which the raw materials are available (powder, crumbs, liquid) various apparatuses or combinations thereof can be used, such as a roll mill, impeller mixer, Banbury mixer, kneading extruder and the like.

As impact resistant polymer compositions are supplied by their producers substantially in the form of granulate, the polymer composition will generally, after the mixing of the raw materials, be granulated by means of an extruder. In this extruder the mixing can be effected also.

A very suitable process for preparing the polymer composition according to the invention consists in that 2-25 parts by weight of carboxylated rubber, 0-25 parts by weight of uncarboxylated rubber, with the total amount of rubber applied being at least 4 % (wt) calculated on the total amount of polymer composition, 1-15 parts by weight of a polymer which at least consist of vinyl alcohol groups and vinyl chloride groups in a molar ratio between 1 : 5 and 1 : 50, 100 parts by weight of polyvinyl chloride, further preferably 0.01-10 % (wt) calculated on the total quantity of polymer composition, more specifically 0.05-5 % (wt), of one or more customary esterification accelerators, for instance esterification accelerators based on an organic metal compound such as dibutyltinmaleate, tetrabutoxytitanium, magnesium stearate and/or zinc stearate and possibly other ingredients are supplied to a mixing device, for instance a roll mill, and the whole of it is mixed for 0.5 - 120 minutes, preferably for 1 - 30 minutes, at a temperature of 425 - 500 K, preferably at 425-475 K.

Another very suitable manner for preparing the polymer composition according to the invention consists in that 2-25 parts by weight of carboxylated rubber, 0-25 parts by weight of uncarboxylated rubber, with the total amount of rubber applied being at least 4 % (wt) calculated on the total amount of polymer composition, 1-15 parts by weight of a polymer which at least consists of vinyl alcohol groups and vinylchloride groups in a molar ratio between 1 : 5 and 1 : 50 and possibly other additives are supplied to a mixing device, for instance a roll mill, the whole of it is mixed for 0.5-120 minutes, preferably for 1 - 30 minutes, at 425-500 K, preferably at 425-475 K, in a first mixing step, after the first mixing step 100 parts by weight of polyvinyl · chloride, further preferably 0.01 - 10 % (wt) calculated on the total quantity of the polymer composition, more specifically 0.05 - 5 % (wt), of one or more customary esterification accelerators, for instance esterification accelerators based on an organic metal compound such as dibutyltinmaleate, tetrabutoxytitanium, magnesium stearate and/or zinc stearate and possibly other additives are supplied to the mixing device, and this new whole is further mixed in a second mixing step for 0.5 - 120 minutes, preferably for 1 - 30 minutes, at 425 - 500 K, preferably at 425 - 475 K.

The polymer composition according to the invention is particularly suitable for the production of objects that must come up to high standards in respect of their mechanical and physical properties, such as impact resistance, rigidity, etc., for instance tubes, bottles, furniture, dahsboards for motor cars, cases and housings for electronic and domestic apparatuses, shoe heels, caravans, skis and surf boards.

The invention is further elucidated by means of the following examples and comparative experiments without being limited thereto.

Example I

To a roll mill consisting of two rolls, diameter 80 mm, width 200 mm, with a friction of 1 : 1.2, are supplied 74 g polyvinyl chloride with a K value of 70.5, 4 g carboxylated EPDM rubber with 1.3 % (wt) maleic anhydride groups, 2 g of a polymer consisting of 10 moles % vinyl alcohol groups, 89 moles % vinyl chloride groups and 1 mole % vinylacetate groups, 0,8 g dibutyltinmaleate and 0.2 g octadecyl-3-(3,5-ditertiary-butyl-4-hydroxyphenyl)propionate.

The whole of it is subsequently mixed for 25 minutes at a temperature of 433 K and a speed of about 35 rpm.

Of the polymer composition thus prepared the Izod value is determined according to ASTM D 256 and the flexural modulus according to ASTM D 790. The Izod value is more than 120 kJ/m$^2$ and the flexural modulus 2630 N/mm$^2$.

Example II

To a roll mill as described in example I are supplied 64 g of the polyvinyl chloride having a K value of 70.5, 8 g carboxylated EPDM rubber with 1.3 % (wt) maleic anhydride groups, 8 g of a polymer consisting of 10 moles % vinyl alcohol groups, 89 moles % vinyl chloride groups and 1 mole % vinyl acetate groups, 0.4 g dibutyltinmaleate and 0.2 g octadecyl-3-(3,5-di-tertiary-butyl-4-hydroxyphenyl)propionate.

The whole of it is subsequently mixed for 15 minutes at a temperature of 433 K and a speed of about 35 rpm.

Of the polymer composition thus prepared the Izod value determined as described in example I is more than 120 kJ/$m^2$ and the flexural modulus determined as described in example I is 2220 N/$mm^2$.

Example III

To a roll mill as described in example I are supplied 68 g of the polyvinyl chloride having a K value of 70.5, 8 g carboxylated EPDM rubber with 1.3 % (wt) maleic anhydride groups, 4 g of a polymer consisting of 10 moles % vinyl alcohol groups, 89 moles % vinyl chloride groups and 1 mole % vinyl acetate groups, 0.4 g dibutyltinmaleate and 0.2 g octadecyl-3-(3,5-di-tertiary-butyl-4-hydroxyphenyl) propionate.

The whole of it is subsequently mixed for 15 minutes at a temperature of 433 K and a speed of about 35 rpm.

Of the polymer composition thus prepared the Izod value determined as described in example I is more than 120 kJ/$m^2$ and the flexural modulus determined as described in example I is 2130 N/$mm^2$.

Example IV

To a roll mill as described in example I are supplied 74 g of the polyvinyl chloride having a K value of 70.5, 4 g carboxylated EPDM rubber with 1.3 % (wt) maleic anhydride groups, 2 g of a polymer consisting of 10 moles % vinyl alcohol groups, 89 moles % vinyl chloride groups and 1 mole % vinyl acetate groups, 0.8 g dibutyltinmaleate and 0.2 g octadecyl-3-(3,5-di-tertiary-butyl-4-hydroxyphenyl)propionate.

The whole of it is subsequently mixed for 20 minutes at a temperature of 433 K and a speed of about 35 rpm.

Of the polymer composition thus prepared the Izod value determined as described in example I is more than 120 kJ/m$^2$ and the flexural modulus determined as described in example I 2630 N/mm$^2$.

Example V

To a roll mill as described in example I are supplied 74.8 g of the polyvinyl chloride having a K value of 70.5, 4 g carboxylated EPDM rubber with 1.3 % (wt) maleic anhydride groups, 1.2 g of a polymer consisting of 10 moles % vinyl alcohol groups, 89 moles % vinyl chloride groups and 1 mole % vinyl acetate groups, 0.8 g dibutyl-tinmaleate and 0.2 g octadecyl-3-(3,5-di-tertiary-butyl-4-hydroxyphenyl)propionate.

The whole of it is subsequently mixed for 25 minutes at a temperature of 433 K and a speed of about 35 rpm.

Of the polymer composition thus prepared the Izod value determined as described in example I is 84 kJ/m$^2$ and the flexural modulus determined as described in example I is 2580 N/mm$^2$.

Example VI

To a roll mill as described in example I are supplied 74 g of the polyvinyl chloride having a K value of 70.5, 4 g carboxylated EPDM rubber with 1.3 % (wt) maleic anhydride groups, 2 g of a polymer consisting of 10 moles % vinyl alcohol groups, 89 moles % vinyl chloride groups and 1 mole % vinyl acetate groups, 1.6 g dibutyltinmaleate and 0.2 g octadecyl-3-(3,5-di-tertiary-butyl-4-hydroxyphenyl) propionate.

The whole of it is subsequently mixed for 15 minutes at a temperature of 433 K and a speed of about 35 rpm.

Of the polymer composition thus prepared the Izod value determined as described in example I is 109 kJ/m$^2$ and the flexural modulus determined as described in example I is 2630 N/mm$^2$.

Example VII

To a roll mill as described in example I are supplied 73.2 g of the polyvinyl chloride having a K value of 70.5, 2 g carboxylated EPDM rubber with 1.3 % (wt) maleic anhydride groups, 2.8 g uncarboxylated EPDM rubber, 2 g of a polymer consisting of 10 moles % vinyl alcohol groups, 89 moles % vinyl chloride groups and 1 mole % vinyl acetate groups, 0.8 g dibutyltinmaleate and 0.2 g octadecyl-3-(3,5-di-tertiary-butyl-4-hydroxyphenyl)propionate.

The whole of it is subsequently mixed for 10 minutes at a temperature of 433 K and a speed of about 35 rpm.

Of the polymer composition thus prepared the Izod value determined as described in example I is more than 120 kJ/m$^2$ and the flexural modulus determined as described in example I is 2480 N/mm$^2$.

Example VIII

To a roll mill as described in example I are supplied 73.2 g of the polyvinyl chloride having a K value of 70.5, 2 g carboxylated EPDM rubber with 1.3 % (wt) maleic anhydride groups, 2.8 g uncarboxylated EPDM rubber, 2 g of a polymer consisting of 10 moles % vinyl alcohol groups, 89 moles % vinyl chloride groups and 1 mole % vinyl acetate groups, 0.8 g dibutyltinmaleate and 0.2 g octadecyl-3-(3,5-di-tertiary-butyl-4-hydroxyphenyl) propionate.

The whole of it is subsequently mixed for 25 minutes at a temperature of 433 K and a speed of about 35 rpm.

Of the polymer composition thus prepared the Izod value determined as described in example I is more than 120 kJ/m$^2$ and the flexural modulus determined as described in example I is 2500 N/mm$^2$.

Example IX

To a roll mill as described in example I are supplied 4 g carboxylated EPDM rubber with 1.3 % (wt) maleic anhydride groups and 4 g of a polymer consisting of 10 moles % vinyl alcohol groups, 89 moles % vinyl chloride groups and 1 mole % vinyl acetate groups.

The whole of it is subsequently pre-mixed for 5 minutes at a temperature of 433 K and a speed of about 35 rpm.

After the pre-mixing, 72 g of the polyvinyl chloride having a K value of 70.5, 0.2 g octadecyl-3-(3,5-di-tertiarybutyl-4-hydroxyphenyl)propionate and 0.4 g dibutyltinmaleate are supplied to the roll mill.

The whole of it is then further mixed for 20 minutes at a temperature of 433 K and a speed of about 35 rpm.

Of the polymer composition thus prepared the Izod value determined as described in example I is more than 120 kJ/m$^2$ and the flexural modulus determined as described in example I is 2690 N/mm$^2$.


Example X

To a roll mill as described in example I are supplied 8 g carboxylated EPDM rubber with 2.3 % (wt) maleic anhydride groups and 8 g of a polymer consisting of 10 moles % vinyl alcohol groups, 89 moles % vinyl chloride groups and 1 mole % vinyl acetate groups.

The whole of it is subsequently pre-mixed for 5 minutes at a temperature of 433 K and a speed of about 35 rpm.

After the pre-mixing, 64 g of the polyvinyl chloride having a K value of 70.5, 0.16 g octadecyl-3-(3,5-di-tertiary-butyl-4-hydroxyphenyl)propionate and 0.4 g dibutyltinmaleate are supplied to the roll mill.

The whole of it is then further mixed for 10 minutes at a temperature of 433 K and a speed of about 35 rpm.

Of the polymer composition thus prepared the Izod value determined as described in example I is more than 120 kJ/m$^2$ and the flexural modulus determined as described in example I is 2210 N/mm$^2$.


Example XI

To a roll mill as described in example I are supplied 8 g carboxylated EPDM rubber with 2.3 % (wt) maleic anhydride groups and 6.4 g of a polymer consisting of 10 moles % vinyl alcohol groups, 89 moles % vinyl chloride groups and 1 mole % vinyl acetate groups.

The whole of it is subsequently pre-mixed for 5 minutes at a temperature of 433 K and a speed of about 35 rpm.

After the pre-mixing 65.6 g of the polyvinyl chloride having a K value of 70.5, 0.16 g octadecyl-3-(3,5-di-tertiary-butyl-4-hydroxyphenyl)propionate and 0.4 g dibutyltinmaleate are supplied to the roll mill.

The whole of it is then further mixed for 10 minutes at a temperature of 433 K.

Of the polymer composition thus prepared the Izod value determined as described in example I is 115 kJ/m$^2$ and the flexural modulus determined as described in example I is 2180 N/mm$^2$.

## Comparative experiment A

To a roll mill as described in example I are supplied 80 g of the polyvinyl chloride having a K value of 70.5, 0.8 g dibutyltinmaleate and 0.2 g octadecyl-3-(3,5-di-tertiary-butyl-4-hydroxyphenyl)propionate.

The whole of it is subsequently mixed for 25 minutes at a temperature of 433 K and a speed of about 35 rpm.

Of the polymer composition thus prepared the Izod value determined as described in example I is 5 kJ/m$^2$ and the flexural modulus determined as described in example I is 3100 N/mm$^2$.

## Comparative experiment B

To a roll mill as described in example I are supplied 72 g of the polyvinyl chloride having a K value of 70.5, 8 g of a polymer consisting of 10 moles % vinyl alcohol groups, 89 moles % vinyl chloride groups and 1 mole % vinyl acetate groups, 0.8 g dibutyltinmaleate and 0.2 g octadecyl-3-(3,5-di-tertiary-butyl-4-hydroxyphenyl)propionate.

The whole of it is subsequently mixed for 25 minutes at a temperature of 433 K and a speed of about 35 rpm.

Of the polymer composition thus prepared the Izod value determined as described in example I is 4 kJ/m$^2$ and the flexural modulus determined as described in example I is 3080 N/mm$^2$.

## Comparative experiment C

To a roll mill as described in example I are supplied 75.2 g of the polyvinyl chloride having a K value of 70.5, 4.8 g uncarboxylated EPDM rubber, 0.8 g dibutyltinmaleate and 0.2 g octadecyl-3-(3,5-di-tertiary-butyl-4-hydroxyphenyl)propionate.

The whole of it is subsequently mixed for 25 minutes at a temperature of 433 K and a speed of about 35 rpm.

Of the polymer composition thus prepared the Izod value determined as described in example I is 15 kJ/m$^2$ and the flexural modulus determined as described in example I is 2490 N/mm$^2$.

Comparative experiment D

To a roll mill as described in example I are supplied 75.2 g of the polyvinyl chloride having a K value of 70.5, 4.8 g carboxylated EPDM rubber with 1.3 % (wt) maleic anhydride groups, 0.8 g dibutyltinmaleate and 0.2 g octadecyl-3-(3,5-di-tertiary-butyl-4-hydroxyphenyl) propionate.

.The whole of it is subsequently mixed for 25 minutes at a temperature of 433 K and a speed of about 35 rpm.

Of the polymer composition thus prepared the Izod value determined as described in example I is 10 kJ/m$^2$ and the flexural modulus determined as described in example I is 2520 N/mm$^2$.

Comparative experiment E

To a roll mill as described in example I are supplied 73.2 g of the polyvinyl chloride having a K value of 70.5, 4.8 g uncarboxylated EPDM rubber, 2 g of a polymer consisting of 10 moles % vinyl alcohol groups, 89 moles % vinyl chloride groups and 1 mole % vinyl acetate groups, 0.8 g dibutyltinmaleate and 0.2 g octadecyl-3-(3,5-di-tertiary-butyl-4-hydroxyphenyl)propionate.

The whole of it is subsequently mixed for 25 minutes at a temperature of 433 K and a speed of about 35 rpm.

Of the polymer composition thus prepared the Izod value determined as described in example I is 12 kJ/m$^2$ and the flexural modulus determined as described in example I is 2430 N/mm$^2$.

Comparative experiment F

To a roll mill as described in example I are supplied 75.2 g of the polyvinyl chloride having a K value of 70.5, 2 g carboxylated EPDM rubber with 1.3 % (wt) maleic anhydride groups, 2.8 g uncarboxylated EPDM rubber, 0.8 g dibutyltinmaleate and 0.2 g octadecyl-3-
(3,5-di-tertiary-butyl-4-hydroxyphenyl)propionate.

The whole of it is subsequently mixed for 25 minutes at a temperature of 433 K and a speed of about 35 rpm.

Of the polymer composition thus prepared the Izod value determined as described in example I is 14 kJ/m$^2$ and the flexural modulus
determined as described in example I is 2380 N/mm$^2$.

The results of the examples and of the comparative experiments are summarized in the table below, where:

I      : the number of the example or of the comparative experiment;

II     : the quantity of PVC used in g;

III    : the quantity of carboxylated EPDM rubber used in g;

IV     : the quantity of uncarboxylated EPDM rubber used in g;

V      : the quantity of vinyl alcohol-vinyl chloride- vinyl acetate polymer used in g;

VI     : the quantity of dibutylmaleate in g;

VII    : the quantity of octadecyl-3-(3,5-di-tertiary-butyl-4-hydroxyphenyl)propionate used in g;

VIII   : the measured Izod value in kJ/m$^2$;

IX     : the measured flexural modulus in N/mm$^2$; and

X      : the total mixing time in minutes.

| I | II | III | IV | V | VI | VII | VIII | IX | X |
|---|---|---|---|---|---|---|---|---|---|
| I | 74 | 4 | | 2 | 0,8 | 0,2 | 120 | 2630 | 25 |
| II | 64 | 8 | | 8 | 0,4 | 0,2 | 120 | 2220 | 15 |
| III | 68 | 8 | | 4 | 0,4 | 0,2 | 120 | 2130 | 15 |
| IV | 74 | 4 | | 2 | 0,8 | 0,2 | 120 | 2630 | 20 |
| V | 74,8 | 4 | | 1,2 | 0,8 | 0,2 | 84 | 2580 | 25 |
| VI | 74 | 4 | | 2 | 1,6 | 0,2 | 109 | 2630 | 15 |
| VII | 73,2 | 2 | 2,8 | 2 | 0,8 | 0,2 | 120 | 2480 | 10 |
| VIII | 73,2 | 2 | 2,8 | 2 | 0,8 | 0,2 | 120 | 2500 | 25 |
| IX | 72 | 4 | | 4 | 0,4 | 0,2 | 120 | 2690 | 25 |
| X | 64 | 8 | | 8 | 0,4 | 0,16 | 120 | 2210 | 15 |
| XI | 65,6 | 8 | | 6,4 | 0,4 | 0,16 | 115 | 2180 | 15 |
| A | 80 | | | | 0,8 | 0,2 | 5 | 3100 | 25 |
| B | 72 | | | 8 | 0,8 | 0,2 | 4 | 3080 | 25 |
| C | 75,2 | | 4,8 | | 0,8 | 0,2 | 15 | 2490 | 25 |
| D | 75,2 | 4,8 | | | 0,8 | 0,2 | 10 | 2520 | 25 |
| E | 73,2 | | 4,8 | 2 | 0,8 | 0,2 | 12 | 2430 | 25 |
| F | 75,2 | 2 | 2,8 | | 0,8 | 0,2 | 14 | 2380 | 25 |

01ЯOЯ08

## C L A I M S

1. Impact-resistant polymer composition based on a vinyl chloride
   polymer characterized in that it at least consists of
   a) 100 parts by weight of polyvinyl chloride,
   b) 2 - 25 parts by weight of carboxylated rubber,
   c) 0 - 25 parts by weight of uncarboxylated rubber, and
   d) 1 - 15 parts by weight of a polymer at least consisting of vinyl
   alcohol groups and vinyl chloride groups in a molar ratio between
   1 : 5 and 1 : 50, in which polymer composition the total amount of
   rubber is at least 4 % (wt) calculated on the total quantity polymer
   composition.

2. Polymer composition according to claim 1, characterized in that it
   at least consists of
   a) 100 parts by weight of polyvinyl chloride,
   b) 2 - 10 parts by weight of carboxylated rubber,
   c) 0 - 10 parts by weight of uncarboxylated rubber, and
   d) 1 - 10 parts by weight of the said polymer which at least consists
   of vinyl alcohol groups and vinyl chloride groups.

3. Polymer composition according to claim 1 or 2, characterized in that
   the carboxylated rubber used is a carboxylated ethylene-propylene-diene
   rubber with preferably 0.1 - 10 % (wt) maleic anhydride groups and
   containing by preference 0.1 - 2 parts by weight UV stabilizer.

4. Polymer composition according to any one of the claims 1-3, characterized in that the uncarboxylated rubber used is an ethylene-
   propylene-rubber and/or ethylene-propylene-diene rubber.

5. Process for the preparation of an impact-resistant polymer composition based on a vinyl chloride polymer, characterized in that 2 -
   25 parts by weight carboxylated rubber, 0 - 25 parts by weight
   uncarboxylated rubber, with the total amount of rubber applied being
   at least 4 % (wt) calculated on the total amount of polymer
   composition, 1 - 15 parts by weight of a polymer which at least
   consists of vinyl alcohol groups and vinyl chloride groups in a molar
   ratio between 1 : 5 and 1 : 50, 100 parts by weight polyvinyl
   chloride and possibly other additives are supplied to a mixing
   device, and the whole of it is mixed for 0.5 - 120 minutes at 425 -
   500 K.

6. Process for the preparation of an impact-resistant polymer composition based on a vinyl chloride polymer, characterized in that 2 - 25 parts by weight of carboxylated rubber, 0 - 25 parts by weight of uncarboxylated rubber, with the total amount of rubber applied being at least 4 % (wt) calculated on the total amount of polymer composition, 1-15 parts by weight of a polymer which at least consists of vinyl alcohol groups and vinyl chloride groups in a molar ratio between 1 : 5 and 1 : 50, and possibly other additives are supplied to a mixing device, the whole of it is mixed for 0.5-120 minutes at 425-500 K in a first mixing step, after the first mixing step 100 parts by weight of polyvinyl chloride and possibly other additives, are supplied to the mixing device, and this new whole is further mixed in a second mixing step for 0.5-120 minutes at 425-500 K.

7. Process according to claim 5 or 6, characterized in that along with or after the supply of the polyvinyl chloride 0.05-10 % (wt) of one or more customary esterification accelerators calculated on the total quantity of polymer composition is supplied.

8. Polymer composition produced by applying a process according to any one of claims 5-7.

9. Object wholly or partly produced from a polymer composition according to any one of claims 1-4 or 8.

# EUROPEAN SEARCH REPORT

European Patent Office

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE-A-2 246 717  (HOECHST AG) <br> * Claims * <br><br> ----- | 1-9 | C 08 L 27/06 // <br> (C 08 L 27/06 <br> C 08 L 23:16 <br> C 08 L 23:26 ) |

TECHNICAL FIELDS SEARCHED (Int. Cl.4)

C 08 L

The present search report has been drawn up for all claims

| Place of search | Date of completion of the search | Examiner |
|---|---|---|
| THE HAGUE | 14-12-1984 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82